# EUROPÄISCHE PATENTSCHRIFT

(11) **EP 4 198 260 B1**
(45) Veröffentlichungstag und Bekanntmachung des Hinweises auf die Patenterteilung: **31.07.2024**
(21) Anmeldenummer: 22209990.5
(22) Anmeldetag: 28.11.2022
(51) Int. Cl.: F01C 1/16, F04C 2/16

(54) **SCHRAUBENSPINDELPUMPE**
SCREW SPINDLE PUMP
POMPE À VIS

(30) Priorität: 14.12.2021 DE 102021133109
(43) Veröffentlichungstag der Anmeldung: 21.06.2023
(73) Patentinhaber: Leistritz Pumpen GmbH, 90459 Nürnberg (DE)
(72) Erfinder: METZ, Herr Jürgen, 90537 Feucht (DE); Popp, Florian, 90443 Nürnberg (DE); LISSEK, Kristin, 90763 Fürth (DE)
(74) Vertreter: Lindner Blaumeier Patent- und Rechtsanwälte

(56) Entgegenhaltungen:
- DE-A1- 102018 131 587
- DE-A1- 2 621 303
- GB-A- 263 540
- US-A1- 2021 164 468

## Beschreibung

Die Erfindung betrifft eine Schraubenspindelpumpe, mit einem Spindelgehäuse, in dem eine Antriebsspindel und wenigstens eine mit dieser kämmende Laufspindel in Spindelbohrungen aufgenommen sind und das einen axialen Fluideinlass und einen axialen Fluidauslass aufweist, sowie ein in das Spindelgehäuse einhausenden Außengehäuse.

Eine solche Schraubenspindelpumpe dient zum Fördern eines Fluids und kommt in unterschiedlichsten Bereichen zum Einsatz. Exemplarisch ist die Förderung eines Kraftstoffes oder eines sonstigen Betriebs- oder Versorgungsfluids, beispielsweise eines Kühlmittels oder Reinigungsmittels, eines Kraftfahrzeugs zu nennen. Auch in anderen Land- oder Luftfahrzeugen wie z.B. Flugzeugen oder Drohnen können solche Schraubenspindelpumpen eingesetzt werden, wobei die Einsatzmöglichkeiten hierauf nicht beschränkt sind. Eine solche Schraubenspindelpumpe weist ein Spindelgehäuse, das auch als Innengehäuse bezeichnet werden kann, auf, in dem wenigstens zwei Spindeln, nämlich eine Antriebsspindel und eine Laufspindel, in jeweiligen Spindelbohrungen, die einander jedoch schneiden, aufgenommen sind. Die Antriebs- und die Laufspindel weisen jeweils ein Spindelprofil auf, wobei die beiden Spindelprofile miteinander kämmen. Die Antriebsspindel ist mit einem Antriebsmotor verbunden und kann aktiv gedreht werden, was auch zu einer Rotation der kämmenden Laufspindel führt. Durch die Spindelrotation wird kontinuierlich ein Fördervolumen in Richtung der Spindellängsachse verschoben, in dem das Fluid gefördert wird. Das Spindelgehäuse ist in einem Außengehäuse aufgenommen, das beispielsweise topfartig sein kann und an einer Seite über eine axiale Wand abgeschlossen sein kann, während an der anderen Seite beispielsweise der Antriebsmotor angeflanscht wird. Denkbar ist es aber auch, dass das Außengehäuse mehrteilig ist und ein zylindrisches Basisteil aufweist, das an der einen Seite über einen Deckel abgeschlossen ist, während an der anderen Seite wiederum der Antriebsmotor angeflanscht ist. Das Außengehäuse weist einen Einlassanschluss auf, an den eine Zuleitung angeschlossen werden kann, worüber die Saugseite definiert wird. Es weist ferner einen Auslassanschluss auf, an den ebenfalls eine Leitung angeschlossen werden kann und über den die Druckseite definiert wird. Dort tritt das geförderte Fluid mit dem jeweiligen, von der Pumpe erzeugbaren Druck aus. Eine derartige Pumpe ist beispielsweise in DE 10 2018 131 587 A1 beschrieben. Das Spindelgehäuse selbst weist einen axialen Fluideinlass an der Saugseite auf, über den das zu fördernde Fluid vom Anschlussstutzen in das Spindelgehäuse strömt, durch das es dann über die interagierenden Spindeln gefördert wird und das es über einen axialen Fluidauslass verlässt, von wo aus es sodann zum Auslassstutz strömt, wo es abgeführt wird.

Um das Fluid zu fördern, muss die Antriebsspindel in eine definierte Richtung gedreht werden, sodass das Fördervolumen von der Saugseite zur Druckseite verschoben wird. Aufgrund der gegebenen Druckverhältnisse ist es bekannt, die beiden Spindeln oder im Falle einer 3-spindeligen Pumpe die Antriebsspindel und die beiden Laufspindeln an der Saugseite über ein Stützelement wie beispielsweise eine Passfeder axial abzustützen, gegen welches Stützelement die Spindeln mit ihren Stirnseiten laufen können. Eine Umkehrung der Drehrichtung, wie sie mitunter kurzzeitig zweckmäßig wäre, gestaltet sich als schwierig. Zwar ist die Antriebsspindel zur Druckseite hin axial abgestützt, da an ihr die Antriebswelle des Motors angreift, die quasi eine Stützfunktion hat. Die Laufspindel jedoch ist axial nicht abgestützt, weshalb es bei einer solchen Drehrichtungsumkehrung zu einer ungewollten Spindelverlagerung kommen kann.

Der Erfindung liegt das Problem zugrunde, eine demgegenüber verbesserte Schraubenspindelpumpe anzugeben.

Zur Lösung dieses Problems ist bei einer Schraubenspindelpumpe der eingangsgenannten Art erfindungsgemäß vorgesehen, dass entweder an dem aus Kunststoff bestehenden Spindelgehäuse im Bereich des Fluidauslasses eine die wenigstens eine Laufspindel axial abstützende Stützeinrichtung umfassend einen axial vorspringenden Stützzapfen vorgesehen ist, oder dass an einer auf das Außengehäuse aufgesetzten, das Außengehäuse axial schließenden und aus Kunststoff bestehenden Gehäuseplatte eine die wenigstens eine Laufspindel axial abstützende Stützeinrichtung umfassend einen axial vorspringenden Stützzapfen vorgesehen ist.

Erfindungsgemäß ist zum einen eine definierte axiale Abstützung der Laufspindel auch an der Druckseite über eine dortseits vorgesehene Stützeinrichtung vorgesehen, die in Form eines axial vorspringenden, je nach gegebener Bauraumsituation kürzeren oder längeren axialen Stützzapfen realisiert ist. Erfindungsgemäß kann diese Stützeinrichtung in zwei grundlegenden, unterschiedlichen Ausgestaltungen vorgesehen sein.

Gemäß einer ersten Erfindungsalternative kann die Stützeinrichtung als einstückiges Teil an dem aus Kunststoff gefertigten Spindelgehäuse vorgesehen respektive angeformt sein. Das heißt, dass das einstückige oder einmaterialige Spindelgehäuse nicht nur die Spindeln in den Spindelbohrungen aufnimmt, sondern gleichzeitig auch das axiale Stützlager für die eine oder im Falle zweier Laufspindeln für die beiden Laufspindeln aufweist. Da das Spindelgehäuse aus Kunststoff gefertigt ist, ist die Ausbildung respektive Anformung einer entsprechenden Stützeinrichtung ohne Weiteres mittels einer geeigneten Kunststoffspritzform möglich. Der Antriebsmotor wird direkt auf das Außengehäuse gesetzt und schließt dieses mit einer entsprechenden Motorplatte axial.

Gemäß einer zweiten Alternative ist die Stützeinrichtung an einer axial auf das Außengehäuse aufgesetzten, das Außengehäuse an dieser Seite schließenden und ebenfalls aus Kunststoff bestehenden Gehäuseplatte, die auch als Zwischenplatte oder Montageplatte bezeichnet werden kann, vorgesehen. Auf diese Gehäuseplatte wird der Antriebsmotor gesetzt und angeflanscht. Da bei der zweiten Alternative das Außengehäuse über die Gehäuseplatte geschlossen wird, ist demzufolge bei dieser Variante die einstückige Anformung der Stützeinrichtung an der Gehäuseplatte zweckmäßig. Das heißt, dass an der Gehäuseplatte der axial vorspringende Stützzapfen einstückig oder einmaterialig angeformt ist, was auch hier ohne Probleme möglich ist, da die Gehäuseplatte ein Kunststoffbauteil ist, sodass die entsprechende Formgebung in einer geeigneten Kunststoffspritzform ohne Weiteres möglich ist.

Bei der erfindungsgemäßen Schraubenspindelpumpe sind daher alle Spindeln zu beiden Seiten axial abgestützt. Dies erlaubt eine Spindelrotation in beide Richtungen, also einen Rechts-Links-Lauf. Das heißt, dass einerseits natürlich ein üblicher Förderbetrieb möglich ist, andererseits aber auch, wenn erforderlich, ein kurzzeitiges Umschalten der Spindelrotationsrichtung, ohne dass es hierbei zu einem inakzeptablen Spindelversatz kommt.

Wie beschrieben, ist bei einer 2-Spindel-Pumpe nur eine Antriebspindel und eine Laufspindel vorgesehen, sodass letztlich auch nur ein der Laufspindel zugeordneter Stützzapfen vorzusehen ist. Alternativ kann die Schraubenspindelpumpe auch als 3-Spindel-Pumpe ausgeführt sein, wobei dann zwei beidseits der Antriebsspindel angeordnete Laufspindeln vorgesehen sind, und die Stützeinrichtung zwei Stützzapfen umfasst oder zwei Stützeinrichtungen mit jeweils einem Stützzapfen vorgesehen sind.

Das Spindelgehäuse weist wie beschrieben die entsprechenden Spindelbohrungen auf. Im Falle einer 2-Spindel-Pumpe ist eine Antriebsspindelbohrung und eine Lagerspindelbohrung vorgesehen, im Falle einer 3-Spindel-Pumpe ist eine mittige Antriebsspindelbohrung und zwei seitliche Laufspindelbohrungen vorgesehen. Wie beschrieben, soll der oder soll jeder Stützzapfen die Laufspindel mittig, also in der Spindellängsachse axial abstützen. Um dies zu ermöglichen, sieht eine zweckmäßige Weiterbildung vor, dass eine am Spindelgehäuse angeformte Stützeinrichtung wenigstens einen oder wenigstens zwei Stege aufweist, wobei der oder jeder Steg eine die Laufspindel aufnehmende Spindelbohrung übergreift und wobei an dem oder jedem Steg ein Stützzapfen vorgesehen ist. Über diese Steganordnung ist eine einfache Ausbildung und Positionierung des oder jedes Stützzapfens in der Laufspindelbohrungsmitte möglich. Denn der Steg erstreckt sich von einer seitlichen Gehäuseposition quasi quer über die Laufspindelbohrung, wobei bohrungsmittig dann der Stützzapfen angeformt ist.

Der oder jeder Stützzapfen weist zweckmäßigerweise einen runden Querschnitt auf, was insbesondere aus fertigungstechnischer Sicht zweckmäßig ist. Der Zapfendurchmesser selbst ist natürlich wesentlich kleiner als der Kerndurchmesser des Spindelkerns der Laufspindel, sodass eine möglichst kleine Anlage- bzw. Reibfläche gegeben ist. Alternativ kann der Querschnitt auch oval oder mehreckig sein. Bevorzugt ist die Zapfenspitze ballig ausgeführt, so dass quasi ein Punktkontakt zur Spindelstirnfläche gegeben ist. Anstelle der Balligkeit kann auch die Spindelstirnfläche leicht ballig sein, während die Zapfenfläche eben ist.

Wie beschrieben, ist die Stützeinrichtung an der Druckseite vorgesehen, also der Seite, wo der Antriebsmotor vorgesehen ist. Im Falle einer am Spindelgehäuse angeformten Stützeinrichtung sieht eine zweckmäßige Weiterbildung dabei vor, dass die Stützeinrichtung eine von der Antriebswelle eines Antriebsmotors durchsetzte, die Antriebswelle lagernde Lagerbohrung aufweist. Das heißt, dass der Stützeinrichtung zusätzlich auch eine Lagerfunktion für die Antriebswelle zukommt, sodass keine zusätzlichen Lagermittel an anderer Stelle außerhalb des Antriebsmotors selbst hierfür vorzusehen sind. Die Antriebswelle des direkt auf das Spindelgehäuse aufgesetzten Antriebsmotors erstreckt sich vom Motor respektive der Motorplatte zu einer Kupplungseinrichtung, über die die Antriebsspindel mit der Antriebswelle gekoppelt ist. Längs dieser Strecke ist die Antriebswelle an einer Axialposition in der Lagerbohrung der Stützeinrichtung geführt, sodass einerseits eine exakte Ausrichtung der Antriebswelle zur Antriebsspindel gegeben ist, und andererseits auch eine permanente Wellenführung, die die Ausbildung etwaiger Unwuchten und dergleichen vermeidet.

Zur Realisierung der Lagerbohrung kann die Stützeinrichtung einen zentralen Ringabschnitt aufweisen, an dem die Lagerbohrung vorgesehen ist, von welchem Ringabschnitt aus sich die Stege zur Seite erstrecken. Es ist demzufolge am Ende des Spindelgehäuses eine quasi offene, korbartige oder gitterartige Struktur ausgebildet. Einerseits ist hierdurch ein entsprechender Fluiddurchtritt sichergestellt, andererseits ist über die Stege auch eine entsprechend stabile Ausgestaltung realisiert wie auch die entsprechenden Stützzapfen an den Stegen ausgebildet werden können, und wie schließlich auch die entsprechende Wellenlagerung ohne Probleme möglich ist.

Alternativ zur Anordnung der Stützeinrichtung am Spindelgehäuse kann die oder können die Stützeinrichtungen wie beschrieben auch an der Gehäuseplatte vorgesehen sein. In diesem Fall kann die Gehäuseplatte eine topfartige Vertiefung aufweisen, in die das aus dem Fluidauslass des Spindelgehäuses strömende Fluid einströmt, wobei die eine oder die beiden Stützeinrichtungen am Boden der Vertiefung, sich axial erstreckend, vorgesehen sind. Die Vertiefung an der Gehäuseplatte ist einerseits zweckmäßig, um im Bereich des Fluidauslasses des Spindelgehäuses einen ausreichend großen Austrittsraum zu schaffen, in den das unter Druck stehende Fluid zunächst strömt, bevor es sodann zum eigentlichen Auslassstutzen, der zumeist radial am Außengehäuse absteht, strömt. Über diese Vertiefung, die beispielsweise im Bereich des Außenumfangs im Querschnitt rundlich ausgeführt ist und keine Ecken oder Kanten aufweist, ist einerseits eine strömungstechnisch zweckmäßige Führung des Fluids nach radial außen möglich, von wo aus das Fluid sodann zum Auslassstutzen strömt. Darüber hinaus lässt sich hierüber auch ein sehr geräuscharmer Pumpenbetrieb realisieren. Am Boden der Vertiefung ist nun das oder sind die Stützeinrichtungen respektive der oder die Stützzapfen angeformt, was problemlos möglich ist, wobei bei dieser Variante die entsprechende Positionierung der Stützzapfen in Bezug auf die Position der Laufspindellängsachse ohne Weiteres möglich ist, irgendwelche stegförmigen Halterungen etc. sind hier nicht von Nöten.

Die oder jede Stützeinrichtung kann eine am Boden angeformte Basis aufweisen, an der der gegenüber der Basis schmälere Stützzapfen absteht. Wie beschrieben, ist aufgrund der Vertiefungsgeometrie der Boden der Gehäuseplatte axial gesehen ein Stück weit von der Stirnfläche der jeweiligen Laufspindel beabstandet. Das heißt, dass die Stützeinrichtung eine gewisse axiale Strecke vom Boden zur Laufspindel überbrücken muss. Der Stützzapfen selbst weist bevorzugt einen relativ kleinen Durchmesser auf. Damit der Stützzapfen hinreichend stabil an dem Vertiefungsboden angebunden ist, ist bodenseitig zunächst eine entsprechende, im Durchmesser deutlich breitere Basis vorgesehen, die sich axial erstreckt, und an der dann der deutlich schmälere oder dünnere Stützzapfen angeformt ist. Hierüber wird vermieden, dass es zu irgendwelchen geometrischen Änderungen des Stützzapfens kommt, was gegebenenfalls der Fall wäre, wenn dieser als sehr dünner Zapfen direkt am Boden der Vertiefung angeformt wäre und sich bis zur Laufspindel erstrecken würde.

Wie beschrieben, wird die Gehäuseplatte direkt auf das Außengehäuse aufgesetzt, sie schließt dieses axial. Der Antriebsmotor wird auf die Gehäuseplatte aufgesetzt. Damit die Antriebswelle des Antriebsmotors zur Antriebsspindel geführt werden kann, ist die Gehäuseplatte mit einer entsprechenden, bodenseitig vorgesehenen Lagerbohrung versehen, durch die die Antriebswelle des Motors läuft.

Wie beschrieben, sind die Spindeln an der Saugseite ebenfalls über ein geeignetes Stützelement wie beispielsweise eine Passfeder axial abgestützt. Dieses Stützelement kann auf unterschiedliche Weise angeordnet werden. Gemäß einer ersten Alternative ist das Spindelgehäuse an der der Stützeinrichtung gegenüberliegenden Seite axial offen, wobei gemäß der ersten Variante im Bereich des offenen Endes Haltemittel zur Fixierung eines die Antriebsspindel und die eine oder die beiden Laufspindeln axial stützenden Stützelements, also beispielsweise der Passfeder, vorgesehen sind. Hier wird also das Stützelement respektive die Passfeder am Spindelgehäuse selbst angeordnet und fixiert. Alternativ ist es bei axial offenem Spindelgehäuse denkbar, das Stützelement zwischen der Stirnseite des Spindelgehäuses und einer axialen Gehäusewand des Außengehäuses aufzunehmen. Hier ist folglich das Stützelement respektive die Passfeder zwischen Spindelgehäuse und der axialen Außengehäusewand aufgenommen. Die Fixierung erfolgt also quasi durch ein entsprechendes Verklemmen des Stützelements zwischen Spindelgehäuse und Außengehäuse. Dabei kann im Falle beider Varianten das Außengehäuse topfartig ausgeführt sein, mit einem zylindrischen Gehäuseabschnitt und einer daran anschließenden axialen Gehäusewand, an der beispielsweise der axiale Zulaufstutzen vorgesehen ist. Alternativ kann das Außengehäuse auch zweiteilig sein, mit einem z.B. zylindrischen Gehäuseteil, auf das eine deckelartige axiale Gehäusewand aufgesetzt wird, an der der Zulaufstutzen vorgesehen ist.

Denkbar ist es schließlich aber auch, dass das Stützelement respektive die Passfeder an einer separaten, deckelartigen Gehäusewand des Außengehäuses, das in diesem Fall zweiteilig ist, vorgesehen ist, beispielsweise in einer entsprechenden Klemmnut oder dergleichen, die an der Innenfläche dieser separaten Gehäusewand ausgebildet ist.

Erfolgt die Befestigung des Stützelements respektive der Passfeder am Spindelgehäuse selbst, so sind die Haltemittel am Gehäuse zweckmäßigerweise in Form zwei einander gegenüberliegender Durchbrechungen im Spindelgehäuse ausgeführt, in die das Stützelement in Form der Passfeder eingreift. Die Passfeder wird demzufolge von außen durch die eine Durchbrechung bis in die andere hineingeschoben, wobei hier beispielsweise ein leichter Klemmsitz zu einer Selbsthalterung führt.

Wie beschrieben, ist das Spindelgehäuse bevorzugt aus Kunststoff, was im Rahmen der ersten grundlegenden Erfindungsvariante das einfache unmittelbare Anformen der Stützeinrichtung am Spindelgehäuse ermöglicht, aber auch bei der zweiten Variante im Hinblick auf eine einfache Herstellung des Spindelgehäuses und ein möglichst geringes Pumpengewicht zweckmäßig ist. Bei bekannten Schraubenspindelpumpen ist zumeist ein radialer Auslassanschluss vorgesehen, das heißt, dass das geförderte Fluid aus dem Spindelgehäuse selbst entweder direkt radial austritt und in eine kleine Kammer strömt, die sich zum Auslassstutzen öffnet. Im Falle eines axialen Austritts aus dem Spindelgehäuse ist ebenfalls eine entsprechende Strömungsführung hin zum radialen Auslassstutzen erforderlich. Innerhalb des Spindelgehäuses ist ein Druckgradient gegeben, nämlich von der Saugseite mit niedrigerem Fluiddruck hin zur Druckseite mit hohem Fluiddruck. Dies kann bei einem aus Kunststoff gefertigten Spindelgehäuse bei großen Druckgradienten dazu führen, dass es mitunter zu Geometrieänderungen des aus Kunststoff bestehenden Spindelgehäuses kommen kann und dieses sich geringfügig weiten kann, insbesondere in Richtung des Fluidauslasses, was sich nachteilig auf die Effizienz respektive den Pumpenwirkungsgrad auswirkt. Um dem zu begegnen, sieht eine zweckmäßige Weiterbildung der Erfindung vor, dass der axiale Fluidauslass für das über die Antriebs- und die Laufspindel durch das Spindelgehäuse geförderte Fluid mit einer zwischen dem Spindelgehäuse und dem Außengehäuse ausgebildeten, sich um 360° erstreckenden Fluidkammer kommuniziert, die wiederum mit dem radialen Fluidauslassanschluss des Außengehäuses kommuniziert. Demgemäß ist eine radiale Fluidkammer zwischen dem Spindelgehäuse und dem Außengehäuse vorgesehen, die das Spindelgehäuse als umlaufende Ringkammer umgibt. Diese ringförmige Fluidkammer, die auch als Druckkammer bezeichnet werden kann, liegt an der Druckseite, da ihr das aus dem Spindelgehäuse austretende, unter Druck stehende Fluid zugeführt wird. Dieses Fluid tritt aus dem Spindelgehäuse axial aus, das heißt, dass eine entsprechend große, axiale Fluidauslassöffnung am Spindelgehäuse vorgesehen ist, im Bereich welcher wie beschrieben bei einstückiger Ausbildung die Stützeinrichtung vorgesehen ist. Aus der Auslassöffnung strömt das unter Druck stehende Fluid, entsprechend umgelenkt und radial nach außen geführt, in die Fluidkammer, in der demzufolge das unter Druck stehende Fluid vorliegt. Vorteilhaft liegt infolge der ringförmigen Geometrie dieser Fluidkammer um das Spindelgehäuse allseitig der entsprechende Pumpendruck an, das heißt, dass letztlich nahezu symmetrische Druckverhältnisse am Spindelgehäuse gegeben sind respektive im Überdeckungsbereich ein symmetrischer Druck auf diesem lastet. Hierdurch werden einerseits lokale Drucküberhöhungen, wie sie aus einer unsymmetrischen Druckverteilung resultieren, vermieden. Zum anderen werden, resultierend aus dem sich auch im Spindelgehäuse aufbauenden Fluiddruck ergebende, wenngleich geringe Deformationen des Spindelgehäuses vermieden, da das Spindelgehäuse radial außen mit dem Fluiddruck belastet und daher stabilisiert ist. Es wird demzufolge ein Fluidmantel realisiert, der einen entsprechenden Radialdruck ausbildet. Dies ermöglicht es, einerseits das Spindelgehäuse ohne Weiteres aus dem weicheren Kunststoffmaterial zu fertigen, andererseits aber auch entsprechend hohe Pumpendrucke erzeugen zu können.

Die erfindungsgemäß vorgesehene Fluidkammer erstreckt sich bevorzugt über wenigstens einen Teil der axialen Länge des Spindelgehäuses respektive des Gehäusebereichs, in dem die Spindelbohrungen vorgesehen sind. Die Fluidkammer sollte sich dabei um wenigstens die halbe Länge der Spindelbohrung respektive des Spindelgehäuses erstrecken, gegebenenfalls auch länger, beispielsweise über ca. 2/3 der Länge der Spindelbohrungen respektive des Spindelgehäuses. Denkbar ist es auch, dass sich die Fluidkammer über die gesamte Länge der Spindelbohrung bzw. des Spindelgehäuses erstreckt. Aufgrund des axialen Austritts des Fluids aus dem Spindelgehäuse, was unter anderem auch zur Reduzierung etwaiger Strömungsgeräusche führt und daher vorteilhaft ist, und der erforderlichen Umlenkung in Richtung der Fluidkammer beginnt die Fluidkammer letztlich am druckseitigen Ende des Spindelgehäuses und erstreckt sich dann axial gesehen zum saugseitigen Ende. Die Fluidkammer ist natürlich in geeigneter Weise entsprechend abgedichtet, sodass eine ungewollte Fluidströmung zurück zur Saugseite ausgeschlossen ist und das Fluid ausschließlich über den radialen Auslassanschluss ausströmen kann.

Da wie beschrieben das Fluid aus dem Spindelgehäuse axial austritt, die Fluidkammer sich jedoch quasi von der Druckseite in Richtung der Saugseite erstreckt, ist es erforderlich, das unter Druck stehende Fluid umzulenken und axial quasi wieder zurückzuführen. Um dies zu ermöglichen, kann die Vertiefung der Gehäuseplatte als das vom Fluidauslass des Spindelgehäuses austretende Fluid zur Fluidkammer umlenkende Umlenkkavität dienen. Diese Vertiefung, die sich radial relativ weit zur Seite erstreckt, ermöglicht es demzufolge, das Fluid wieder axial gesehen zurückzuführen, wobei die Vertiefung natürlich mit der ringförmigen Fluidkammer kommuniziert. Alternativ zu dieser Ausgestaltung, wenn keine Gehäuseplatte vorgesehen ist, kann auch an einem Gehäuse eines auf das Außengehäuse aufgesetzten Antriebsmotors eine das vom Fluidauslass des Spindelgehäuses kommende Fluid zur Fluidkammer umlenkende Umlenkkavität vorgesehen sein. Hier dient also die das Außengehäuse an der Motorseite axial schließende Motorgehäusewand mit ihrer Vertiefung als Umlenkmittel, das das Fluid axial gesehen zurück in die Fluidkammer leitet.

Dabei kann die Umlenkkavität, egal ob sie nun an der Gehäuseplatte, also dem Zwischenbauteil, vorgesehen ist, oder an der Motorwand, als ringförmige Nut oder topfförmige Vertiefung ausgeführt sein, in der wie bereits beschrieben das oder die Stützeinrichtungen vorgesehen sind und die im Bereich des Nut- oder Vertiefungsgrunds rundlich ausgeführt ist. Über diese rundliche Ausgestaltung wird eine geräuscharme radiale und axiale Umlenkung ermöglicht.

Neben der Schraubenspindelpumpe selbst betrifft die Erfindung ferner die Verwendung einer Schraubenspindelpumpe der vorstehend beschriebenen Art in einem Kraftfahrzeug zum Fördern einer Betriebsflüssigkeit. Diese Betriebsflüssigkeit kann beliebiger Natur sein. Es kann sich beispielsweise um eine Reinigungsflüssigkeit handeln, beispielsweise eine Scheibenreinigungsflüssigkeit, die über die Pumpe gefördert wird. Alternativ, und ein bevorzugter erfindungsgemäßer Verwendungszweck, ist die Verwendung der Schraubenspindelpumpe als Kühlmittelpumpe, über die ein Kühlmittel gefördert wird. Ein solches Kühlmittel kann ein beliebiges Fluid sein, um einen zu kühlenden Gegenstand zu kühlen. Die Verwendung betrifft insbesondere den Einsatz zum Fördern eines der Kühlung eines Energiespeichers dienenden Kühlmittels. Ein solcher Energiespeicher kommt zunehmend bei elektromotorisch angetriebenen Kraftfahrzeugen zum Einsatz und ist in Form einer entsprechend dimensionierten Traktions- oder Antriebsbatterie vorgesehen. Der Energiespeicher bedarf einer entsprechenden Kühlung mittels eines Kühlmittels, das über die erfindungsgemäße Schraubenspindelpumpe auf einfache Weise in der geforderten Menge problemlos gefördert werden kann.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: eine Prinzipdarstellung einer erfindungsgemäßen Schraubenspindelpumpe einer ersten Ausführungsform in einer Schnittansicht,
- Fig. 2: eine Schnittansicht durch das Spindelgehäuse mit darin aufgenommener Antriebs- und Laufspindel, sowie daran angeformter Stützeinrichtung,
- Fig. 3: eine Perspektivansicht, geschnitten, des Spindelgehäuses aus Fig. 2,
- Fig. 4: eine Prinzipdarstellung einer erfindungsgemäßen Schraubenspindelpumpe einer zweiten Ausführungsform in einer Schnittansicht,
- Fig. 5: die Schraubenspindelpumpe aus Fig. 4 mit eingesetzten Spindeln und dargestelltem Fluidfluss, und
- Fig. 6: eine geschnittene Teilansicht der Anordnung aus Fig. 5 im Bereich der Gehäuseplatte.

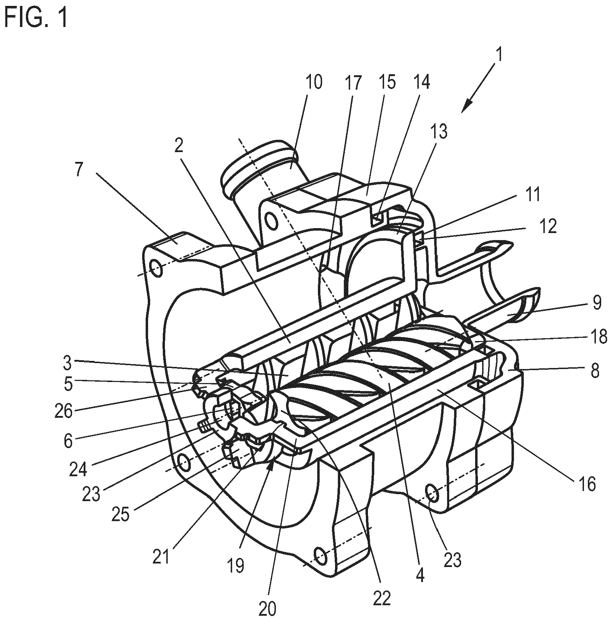

Fig. 1 zeigt eine erfindungsgemäße Schraubenspindelpumpe 1, mit einem Spindelgehäuse 2, in dem im gezeigten Ausführungsbeispiel zwei Spindeln, nämlich eine Antriebsspindel 3 mit einem Spindelprofil sowie eine Laufspindel 4 mit einem Spindelprofil aufgenommen sind. Beide Spindelprofile respektive Spindeln 3, 4 kämmen in an sich bekannter Weise miteinander. Der Antrieb dieses Spindelpakets erfolgt über die Antriebsspindel 3, die mit einem hier nicht näher gezeigten Antriebsmotor bzw. dessen Antriebswelle gekoppelt ist. Hierzu dient ein Kupplungselement 5 mit einer Einsteckaufnahme 6 für einen Kupplungszapfen der Antriebswelle, wobei das Kupplungselement 5 drehfest mit der Antriebsspindel 3 gekoppelt ist. Der Antriebsmotor wird auf oder an ein Außengehäuse 7 gesetzt und damit verschraubt, wobei das quasi hohlzylindrische Außengehäuse 7, wie Fig. 1 zeigt, das Spindelgehäuse 2 vollständig aufnimmt. Das Außengehäuse 7 ist über den nicht näher gezeigten Antriebsmotor respektive das Motorgehäuse axial gesehen an dieser Seite geschlossen. An der gegenüberliegenden Seite ist ein Deckelbauteil 8 axial auf das Außengehäuse 7 gesetzt, dass das Außengehäuse 7 und damit das Pumpeninnere an dieser Seite schließt. Das Deckelbauteil 8, bevorzugt ein Kunststoffbauteil, weist einen axialen Fluideinlassanschluss 9 auf, das heißt, dass an dieser Saugseite das zu fördernde Fluid axial angesaugt, respektive eingeführt wird. Es weist ferner einen zur Seite hin, also hier um 90° verdreht zum Fluideinlassanschluss 9 seitlich abragenden Fluidauslassanschluss 10 auf, über den das unter Druck stehende Fluid zur Seite hin abgeführt wird. Wie natürlich die Verbindung zwischen dem Außengehäuse 7 und dem Antriebsmotor respektive dem Motorgehäuse über ein oder mehrere Dichtelemente entsprechend abgedichtet ist, ist auch die Verbindung des Deckelbauteils 8 zum Außengehäuse 7 wie auch zum Spindelgehäuse 2 abgedichtet. Hierzu ist am Deckelbauteil 8 ein Ringflansch 11 mit einer axialen Aufnahmenut 12 vorgesehen, in der ein erstes Dichtelement, das nicht näher gezeigt ist, anzuordnen ist. Dieses Dichtelement dichtet axial zu einem Ringflansch 13 des Spindelgehäuses 2 hin ab. Die Abdichtung zum Außengehäuse 7 erfolgt ebenfalls über ein nicht näher gezeigtes Dichtmittel, das in einer radial offenen Aufnahmenut 14, die am Außengehäuse 7 ausgebildet ist, aufgenommen ist, wobei diese Aufnahmenut 14 von einem Flansch 15 des Deckelbauteils 8 radial übergriffen ist. Auf diese Weise wird eine vollständige Abdichtung einerseits des Außengehäuses erreicht, andererseits aber auch des Spindelraums, sodass das unter Druck stehende Volumen nicht mehr zurück in den Saugbereich strömen kann. Der auf das Außengehäuse 7 aufgesetzte Antriebsmotor weist eine diese Seite und damit den Spindelraum an dieser Seite axial schließende Motorplatte auf, sofern er direkt auf das Außengehäuse aufgesetzt ist. Alternativ kann auch, worauf nachfolgend noch eingegangen wird, eine Gehäuseplatte zwischengeschaltet sein. In jedem Fall sind auch an dieser Seite entsprechende, nicht näher gezeigte Dichtelemente vorgesehen.

Zwischen dem Spindelgehäuse 2 und dem Außengehäuse 7 ist eine um das Spindelgehäuse 2 um 360° umgreifende Fluidkammer 16 ausgebildet, in die das aus dem Spindelgehäuse 2 axial, also in Richtung des Antriebsmotors ausströmende Fluid umgelenkt wird und eintritt. Das heißt, dass der spindelgehäuseseitige Fluidauslass mit der Fluidkammer kommuniziert. Die Fluidkammer 16 kommuniziert ihrerseits wieder mit dem Fluidauslassanschluss 10, wozu eine entsprechende Öffnung 17 am Deckelbauteil 8 vorgesehen ist.

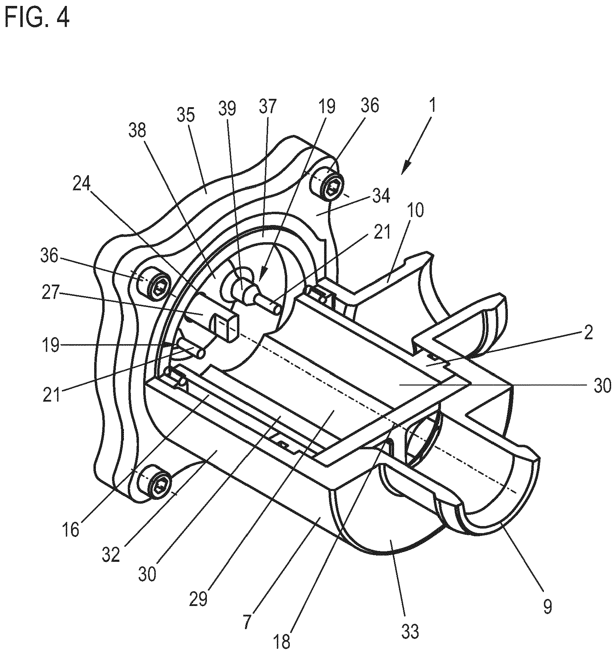

Diese Öffnung 17 ist zur Fluidkammer 16 hin offen. Die Fluidkammer 16 ist mit dem bereits unter Druck stehenden Fluid gefüllt, sodass das Fluid umfänglich auf das Spindelgehäuse 2 einen entsprechenden Druck ausüben kann, der einer etwaigen Geometrieveränderung des Spindelgehäuses 2 entgegenwirkt. Die Umlenkung erfolgt über eine entsprechende Umlenkkavität, die entweder an der den Pumpenraum schließenden Gehäusewand des Motorgehäuses, wenn dieser direkt auf das Außengehäuse 7 gesetzt ist, ausgebildet ist, oder an der zwischengeschalteten Gehäuseplatte, die zwischen dem Außengehäuse 7 und dem Motorgehäuse angeordnet ist. Diese Gehäuseplatte wird nachfolgend noch zu den Figuren 4 - 6 näher beschrieben.

Die beiden Spindeln 3, 4 sind axial an der Saugseite, also am Deckelbauteil 8, wo der Fluideinlass in das Spindelgehäuse 2 vorgesehen ist, über ein Stützbauteil 18 in Form einer Passfeder axial abgestützt, sodass hier ein definiertes Widerlager gebildet ist. In der Gegenrichtung ist die Antriebsspindel 3 an der Antriebswelle des Motors axial abgestützt. Zur axialen Abstützung der Laufspindel 4 ist einstückig am Kunststoff-Spindelgehäuse 2 eine Stützeinrichtung 19 angeformt, umfassend einen Steg 20, an dem ein axial vorspringender Stützzapfen 21 axial zur Laufspindel 4 vorspringt. Gegen diesen axialen Stützzapfen 21 kann die Laufspindel 4 mit ihrer axialen Stirnfläche 22 laufen respektive ist dagegen abgestützt. Die Stützeinrichtung 19 ist wie beschrieben einstückig am Kunststoff-Spindelgehäuse 2 angeformt. Dieses ist also ein einmaterialiges Bauteil, das nicht nur das eigentliche Spindelgehause bildet, sondern darüber hinaus auch die Stützeinrichtung 19 umfasst. Da nur eine Laufspindel 4 vorgesehen ist, ist auch nur eine solche Stützeinrichtung 19 respektive nur ein solcher Stützzapfen 21 vorzusehen.

Des Weiteren ist ebenfalls einstückig am Spindelgehäuse 2 ein zentraler Ringabschnitt 23 angeformt, der eine Lagerbohrung 24 aufweist, durch die die nicht näher gezeigte motorseitige Antriebswelle läuft und in der diese radial gelagert ist. Von diesem zentralen Ringabschnitt 24 erstreckt sich einerseits der Steg 20 zur Gehäusewandung, andererseits sind auch einige weitere Stege 25 vorgesehen, über die der zentrale Ringabschnitt 24 gehäuseseitig angebunden ist.

Die die Antriebswelle aufnehmende Lagerbohrung 24 fluchtet exakt mit der Zentralachse der die Antriebsspindel 3 aufnehmenden Spindelbohrung, sodass keine Toleranzen zwischen der Antriebswellenlagerung und der Spindelachse und damit innerhalb der Kopplung der beiden Bauteile gegeben sind. Es sind folglich keine Unwuchten gegeben, ein sehr ruhiger und geräuschloser Lauf der Spindeln wird dadurch erreicht.

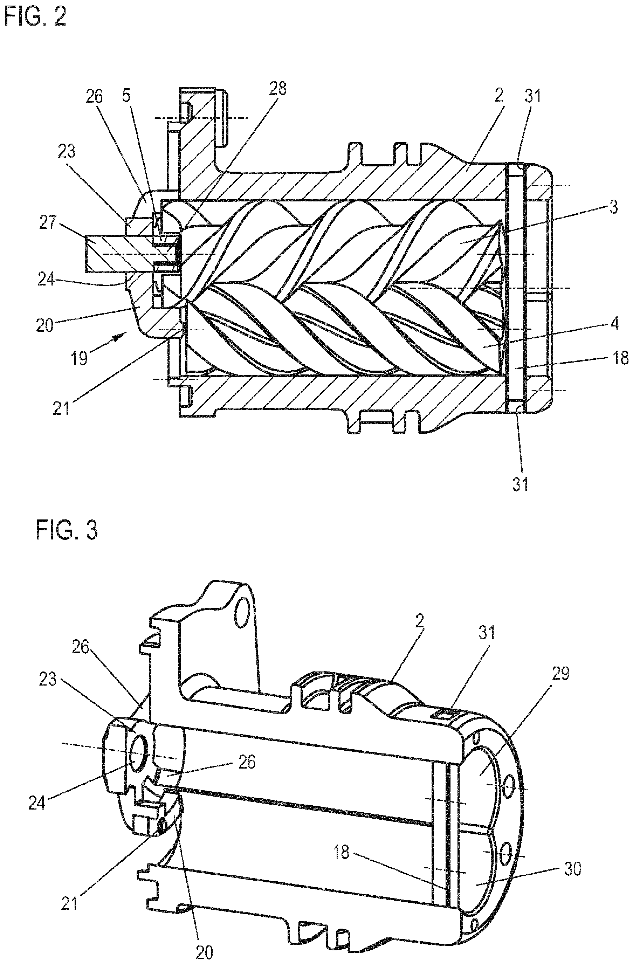

Fig. 2 zeigt in einer Schnittansicht das Spindelgehäuse 2 nebst der Antriebspindel 3 und der Laufspindel 4, die ersichtlich miteinander kämmen. Gezeigt ist weiterhin die einstückig am Spindelgehäuse 2 angeformte Stützeinrichtung 19, wie durch die gleiche Schraffur angedeutet. Gezeigt ist der Steg 20 sowie der axial vorspringende Stützzapfen 21, der axial zur Laufspindel 4 vorspringt. Gezeigt ist des Weiteren zumindest ein weiterer Steg 26, über den der Ringabschnitt 23, in dem die Lagerbohrung 24 ausgebildet ist, am Spindelgehäuse 2 angebunden ist. Dargestellt ist des Weiteren dem Prinzip nach eine Antriebswelle 27, die vom hier nicht näher gezeigten Antriebsmotor kommend durch die Lagerbohrung 24 läuft und mit einem Einsteckzapfen 28 in das Kupplungselement 5 eingreift.

In der perspektivischen Schnittansicht gemäß Fig. 3 ist nochmals das Spindelgehäuse 2, in diesem Fall ohne die beiden Spindeln, gezeigt. Gut zu sehen sind die beiden Spindelbohrungen, wobei die eine Spindelbohrung 29 die Antriebsspindel 3 und die andere Spindelbohrung 30 die Laufspindel 4 aufnimmt. Am gezeigten Steg 20 ist hier gut der Stützzapfen 21 zu sehen. Gezeigt sind ferner weitere Stege 26 sowie der zentrale Ringabschnitt 23 mit der Lagerbohrung 24.

Gezeigt ist des Weiteren die Passfeder 18, siehe hierzu auch Fig. 2. Zur Befestigung der Passfeder 18 am Spindelgehäuse 2 weist das Spindelgehäuse 2 zwei Durchbrechungen 31 auf, in die die Passfeder 18 eingeschoben ist und in denen sie bevorzugt leicht klemmfixiert ist. In der Montagestellung, siehe Fig. 2, sind die beiden Spindeln 3, 4 einerseits an der Saugseite an der Passfeder 18 axial abgestützt. An der anderen Seite, also der Druckseite, ist die Antriebsspindel 3 an der Antriebswelle 27 axial abgestützt, während die Laufspindel 4 an dem Stützzapfen 21 abgestützt ist.

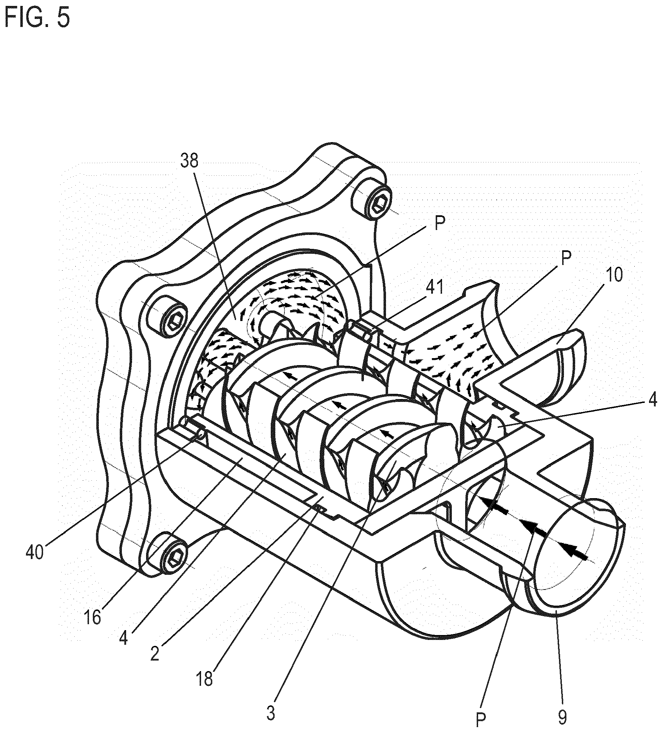

Fig. 4 zeigt eine weitere Ausführungsform einer erfindungsgemäßen Schraubenspindelpumpe 1, wobei für gleiche Bauteile gleiche Bezugszeichen verwendet wird. Bei diesem Ausführungsbeispiel ist ebenfalls ein Spindelgehäuse 2 vorgesehen, in dem im gezeigten Beispiel drei Spindeln aufzunehmen sind, nämlich, siehe Fig. 5, eine mittige Antriebsspindel 3 sowie zwei seitlich um 180° versetzte Laufspindel 4, die in jeweiligen Spindelbohrungen 29 beziehungsweise 30 aufgenommen sind, jedoch in Fig. 4 nicht näher gezeigt sind.

Vorgesehen ist des Weiteren auch ein Außengehäuse 7, das hier ein einstückiges topfartiges Außengehäuse ist und das einen zylindrischen Abschnitt 32 aufweist, der über eine Gehäusewand 33 geschlossen ist. An der Gehäusewand 33 ist der Einlassanschluss 9 vorgesehen, der axial gesehen mittig positioniert ist, und an dem auch der radial zur Seite abgehende Auslassanschluss 10 vorgesehen ist.

Auch hier ist eine Fluidkammer 16 vorgesehen, die zwischen dem Spindelgehäuse 2 und dem Außengehäuse 7 als umlaufende ringförmige Druckkammer ausgebildet ist, und die sich hier nahezu über die gesamte Länge des Spindelgehäuses 2 respektive der Spindelbohrungen 29, 30 erstreckt. Auch diese Fluidkammer 16, die mit dem Auslassanschluss 10 kommuniziert, kommuniziert mit dem Fluidauslass des Spindelgehäuses 2, sodass in sie das unter Druck stehende Fluid strömt und der Radialdruck auf das Spindelgehäuse 2 lastet.

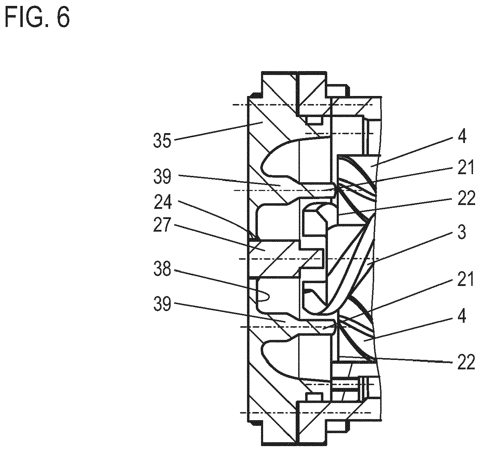

Bei dieser Ausgestaltung weist das Außengehäuse 7 einen Flansch 34 auf, an dem eine Gehäuseplatte 35 axial angeordnet ist, der der nicht näher gezeigte Antriebsmotor folgt, wobei die Anordnung über entsprechende Befestigungsschrauben 36 verschraubt ist. Die Gehäuseplatte 35 weist einen sich axial erstreckenden Ringflansch 37 auf, mit dem sie in die zylindrische Öffnung des Außengehäuses 7 eingreift. Hierüber ist eine topfartige Vertiefung 38 an der Gehäuseplatte 35 ausgebildet, am Boden welcher eine Lagerbohrung 24 ausgebildet ist, die von der Antriebswelle 27 durchgriffen ist. Axial vom Boden der Vertiefung 38 abstehend sind zwei Stützeinrichtungen 19, die axial zu den Laufspindeln 4 laufen. Jede Stützeinrichtung 19, die einstückig an der aus Kunststoff gefertigten Gehäuseplatte 35 angeformt sind, weist eine relativ breite, zylindrische Basis 39 auf, an der jeweils ein dünnerer Stützzapfen 21 axial absteht, an dem wiederum die jeweilige Laufspindel 4 axial anlaufen kann. Diese Ausgestaltung ist in einer detaillierteren, vergrößerten Schnittansicht in Fig. 6 gezeigt. Wie Fig. 6, aber auch Fig. 5 zu entnehmen ist, ist die Vertiefung 38 topfartig ausgeführt und am Bodenbereich gerundet ausgestaltet. Dies deshalb, als über diese Vertiefung 38 das axial aus dem Fluidauslass des Spindelgehäuses 2 ausströmende Fluid radial zur Seite und axial gesehen zurück in die Fluidkammer 16 zu führen ist. Die gerundete Vertiefungsausgestaltung ist dahingehend zweckmäßig, als die Radialführung nach außen und die Umlenkung geräuschlos erfolgt, weil keine Strömungskanten und entsprechende Ecken vorgesehen sind.

Der Fluidfluss ist in Fig. 5 über die Pfeile P dargestellt. Der Zustrom erfolgt über den Einlassstutzen 9. Das Fluid wird über das Spindelpaket axial gefördert und tritt axial an der Druckseite in Richtung der Vertiefung 38, die als Umlenkkavität dient, aus. In der Vertiefung wird es, siehe die Strömungspfeile P, zur Seite umgelenkt und kann axial zurückströmen, wobei es über entsprechende Durchbrechungen 40 in einen Radialflansch 41 des Spindelgehäuses 2, der axial die Fluidkammer 16 begrenzt, in die Fluidkammer 16 einströmen kann. Aus dieser strömt es, siehe die Strömungspfeile P, sodann zum Auslassanschluss 10.

Zur Ausgestaltung der Fig. 4 - 6 ist abschließend noch festzuhalten, dass hier die Passfeder 19 axial zwischen der Stirnfläche des Spindelgehäuses 2 und der Innenwand der Gehäusewand 33 klemmfixiert ist, wobei natürlich auch eine Verdrehsicherung in Umfangsrichtung vorgesehen ist. Die Passfeder 19 ist hier kreuzförmig ausgeführt, was es ermöglicht, bei Bedarf das Spindelgehäuse 2 und damit die Spindelausrichtung auch um 90° verdreht relativ zum Außengehäuse 7 anzuordnen, wenn dies aufgrund der geforderten räumlichen Positionierung des seitlichen radialen Auslassanschlusses 10 erforderlich ist. Denn Ziel ist es, die Spindeln 3, 4 möglichst horizontal liegend zu positionieren, sodass die Spindelachsen parallel in einer Horizontalebene liegen, was für einen möglichst effizienten Förderbetrieb von Vorteil ist.

Auch bei der Ausgestaltung gemäß der Fig. 4 - 6 sind die Antriebsspindel 3 sowie die beiden Laufspindeln 4 axial beidseits abgestützt. Zum einen über die Passfeder 18, zum anderen im Falle der Antriebsspindel 3 über die Antriebswelle 27 und im Falle der Laufspindel 4 über die beiden Stützeinrichtungen 19 respektive die Stützzapfen 21.

Die erfindungsgemäß vorgesehene beidseitige Abstützung der Laufspindeln 4, sei es bei der 2-Spindel-Pumpe oder bei der 3-Spindel-Pumpe, ermöglicht es, im Bedarfsfall die Spindeldrehrichtung auch umschalten zu können, also von der im eigentlichen Förderbetrieb das Fördervolumen von der Saug- zur Druckseite fördernden Drehrichtung in die entgegengesetzte Drehrichtung umzuschalten, was mitunter in der einen oder anderen Betriebssituation erforderlich sein kann. Aufgrund der beidseitigen axialen Abstützung ist hier keine axiale Spindelverlagerung der jeweiligen Laufspindel zu besorgen.

Abschließend ist noch zu erwähnen, dass es sich bei dem nicht näher gezeigten Antriebsmotor entweder um einen Trockenläufer oder um einen Nassläufer handeln kann. Ist es ein Trockenläufer, so ist die hier nur stilisiert gezeigte Antriebswelle 27 in einem Wellendichtring, der in der Lagerbohrung 24 angeordnet ist, aufgenommen, sodass längs der Antriebswelle 27 kein Fluid strömen und in den Antriebsmotor gelangen kann. Die sonstige Abdichtung an dieser Seite erfolgt wie beschrieben entweder über die Motorgehäusewand selbst oder über die Gehäuseplatte 35. Handelt es sich um einen Nassläufer, der über das Fluid zu kühlen ist, so befindet sich in der Lagerbohrung 24 kein Wellendichtring um die Antriebswelle 27, sodass das Fluid längs derselben strömen kann.

## Patentansprüche

1. Schraubenspindelpumpe, mit einem Spindelgehäuse (2), in dem eine Antriebsspindel (3) und wenigstens eine mit dieser kämmende Laufspindel (4) in Spindelbohrungen (29, 30) aufgenommen sind und das einen axialen Fluideinlass und einen axialen Fluidauslass aufweist, sowie einem das Spindelgehäuse (2) einhausenden Außengehäuse (7), **dadurch gekennzeichnet, dass** entweder an dem aus Kunststoff bestehenden Spindelgehäuse (2) im Bereich des Fluidauslasses eine die wenigstens eine Laufspindel (4) axial abstützende Stützeinrichtung (19) umfassend einen axial vorspringenden Stützzapfen (21) vorgesehen ist, oder dass an einer auf das Außengehäuse (7) aufgesetzten, das Außengehäuse (7) axial schließenden und aus Kunststoff bestehenden Gehäuseplatte (35) eine die wenigstens eine Laufspindel (4) axial abstützende Stützeinrichtung (19) umfassend einen axial vorspringenden Stützzapfen (21) vorgesehen ist.

2. Schraubenspindelpumpe nach Anspruch 1, **dadurch gekennzeichnet, dass** zwei beidseits der Antriebsspindel (3) angeordnete Laufspindeln (4) vorgesehen sind, wobei die Stützeinrichtung (19) zwei Stützzapfen (21) umfasst oder zwei Stützeinrichtungen (19) mit jeweils einem Stützzapfen (21) vorgesehen sind.

3. Schraubenspindelpumpe nach Anspruch 1 oder 2, **dadurch gekennzeichnet, dass** der oder die Stützzapfen (21) einen runden, ovalen, oder mehreckigen Querschnitt aufweisen.

4. Schraubenspindelpumpe nach einem der vorangehenden Ansprüche, **dadurch gekennzeichnet, dass** eine am Spindelgehäuse (2) angeformte Stützeinrichtung (19) wenigstens einen oder wenigstens zwei Stege (20) aufweist, wobei der oder jeder Steg (20) eine die Laufspindel (4) aufnehmende Spindelbohrung (30) übergreift und wobei an dem oder jedem Steg (20) ein Stützzapfen (21) vorgesehen ist.

5. Schraubenspindelpumpe nach Anspruch 4, **dadurch gekennzeichnet, dass** die Stützeinrichtung (19) eine von einer Antriebswelle (27) eines Antriebsmotors durchsetzte, die Antriebswelle (27) lagernde Lagerbohrung (24) aufweist.

6. Schraubenspindelpumpe nach Anspruch 5, **dadurch gekennzeichnet, dass** die Stützeinrichtung (19) einen zentralen Ringabschnitt (23), an dem die Lagerbohrung (24) vorgesehen ist, aufweist, von dem aus sich die Stege (20, 25) zur Seite erstrecken.

7. Schraubenspindelpumpe nach einem der Ansprüche 1 bis 3, **dadurch gekennzeichnet, dass** die Gehäuseplatte (35) eine topfartige Vertiefung (38) aufweist, in die das aus dem Fluidauslass des Spindelgehäuses (2) strömende Fluid einströmt, wobei die eine oder die beiden Stützeinrichtungen (19) am Boden der Vertiefung (38), sich axial erstreckend, vorgesehen ist.

8. Schraubenspindelpumpe nach Anspruch 7, **dadurch gekennzeichnet, dass** die oder jede Stützeinrichtung (19) eine am Boden angeformte Basis (39) aufweisen, an der der gegenüber der Basis (39) schmälere Stützzapfen (21) absteht.

9. Schraubenspindelpumpe nach Anspruch 7 oder 8, **dadurch gekennzeichnet, dass** der Boden eine von einer Antriebswelle (27) eines Antriebsmotors durchsetzte, die Antriebswelle (27) lagernde Lagerbohrung (24) aufweist.

10. Schraubenspindelpumpe nach einem der vorangehenden Ansprüche, **dadurch gekennzeichnet, dass** das Spindelgehäuse (2) an der der Stützeinrichtung (19) gegenüberliegenden Seite axial offen ist, wobei entweder im Bereich des offenen Endes Haltemittel zur Fixierung eines die Antriebspindel (4) und die eine oder die beiden Laufspindeln (4) axial stützenden Stützelements (18) vorgesehen sind, oder wobei das Stützelement (18) zwischen der Stirnseite des Spindelgehäuses (2) und einer axialen Gehäusewand (33) des Außengehäuses (7) aufgenommen ist.

11. Schraubenspindelpumpe nach Anspruch 10, **dadurch gekennzeichnet, dass** die Haltemittel in Form zweier einander gegenüberliegender Durchbrechungen (31) im Spindelgehäuse (2) ausgeführt sind, in die das Stützelement in Form einer Passfeder (18) eingreift.

12. Schraubenspindelpumpe nach einem der vorangehenden Ansprüche, **dadurch gekennzeichnet, dass** der axiale Fluidauslass für das über die Antriebs- und die Laufspindel (3, 4) durch das Spindelgehäuse (2) geförderte Fluid mit einer zwischen dem Spindelgehäuse (2) und dem Außengehäuse (7) ausgebildeten, sich um 360° erstreckende Fluidkammer (16) kommuniziert, die wiederum mit dem radialen Fluidauslassanschluss (10) des Außengehäuses kommuniziert.

13. Schraubenspindelpumpe nach Anspruch 12, **dadurch gekennzeichnet, dass** sich die Fluidkammer (16) über wenigstens die halbe Länge der Spindelbohrung (29, 30) erstreckt.

14. Schraubenspindelpumpe nach Anspruch 12 oder 13, **dadurch gekennzeichnet, dass** eine Vertiefung (38) der Gehäuseplatte (35) als das vom Fluidauslass des Spindelgehäuses (2) kommende Fluid zur Fluidkammer (16) umlenkende Umlenkkavität dient.

15. Schraubenspindelpumpe nach einem der Ansprüche 1 bis 13, **dadurch gekennzeichnet, dass** an einem Gehäuse (34) eines auf das Außengehäuse (7) aufgesetzten Antriebsmotors (30) eine das vom Fluidauslass des Spindelgehäuses (2) kommende Fluid zur Fluidkammer (16) umlenkende Umlenkkavität vorgesehen ist.

16. Schraubenspindelpumpe nach Anspruch 14 oder 15, **dadurch gekennzeichnet, dass** die eine Umlenkkavität eine ringförmige Nut oder topfförmige Vertiefung (38) ist, die im Bereich des Nut- oder Vertiefungsgrunds rundlich ausgeführt ist.

17. Verwendung einer Schraubenspindelpumpe (1) nach einem der vorangehenden Ansprüche in einem Kraftfahrzeug zum Fördern einer Betriebsflüssigkeit.

18. Verwendung nach Anspruch 17, **dadurch gekennzeichnet, dass** die Schraubenspindelpumpe (1) als Kühlmittelpumpe, insbesondere zum Fördern eines der Kühlung eines Energiespeichers dienenden Kühlmittels verwendet wird.

## Claims

1. Screw-spindle pump having a spindle housing (2) in which a drive spindle (3) and at least one running spindle (4), which meshes with said drive spindle, are accommodated in spindle bores (29, 30) and which has an axial fluid inlet and an axial fluid outlet, and having an outer housing (7) which accommodates the spindle housing (2), **characterized in that** either provision is made at the spindle housing (2), which consists of plastic, in the region of the fluid outlet of a supporting device (19) which axially supports the at least one running spindle (4) and which comprises an axially projecting supporting pin (21), or provision is made at a housing plate (35) consisting of plastic, which is mounted onto the outer housing (7) and which axially closes the outer housing (7), of a supporting device (19) which axially supports the at least one running spindle (4) and which comprises an axially projecting supporting pin (21).

2. Screw-spindle pump according to Claim 1, **characterized in that** provision is made of two running spindles (4) arranged on either side of the drive spindle (3), wherein the supporting device (19) comprises two supporting pins (21) or provision is made of two supporting devices (19) with in each case one supporting pin (21).

3. Screw-spindle pump according to Claim 1 or 2, **characterized in that** the supporting pin(s) (21) has/have a round, oval or polygonal cross section.

4. Screw-spindle pump according to one of the preceding claims, **characterized in that** a supporting device (19) integrally formed on the spindle housing (2) has at least one or at least two webs (20), wherein the or each web (20) engages over a spindle bore (30) which accommodates the running spindle (4), and wherein provision is made at the or each web (20) of a supporting pin (21).

5. Screw-spindle pump according to Claim 4, **characterized in that** the supporting device (19) has a bearing bore (24) which is passed through by a drive shaft (27) of a drive motor and by way of which the drive shaft (27) is mounted.

6. Screw-spindle pump according to Claim 5, **characterized in that** the supporting device (19) has a central ring portion (23) in which the bearing bore (24) is provided and from which the webs (20, 25) extend laterally.

7. Screw-spindle pump according to one of Claims 1 to 3, **characterized in that** the housing plate (35) has a pot-like depression (38) into which the fluid flowing out of the fluid outlet of the spindle housing (2) flows, wherein the one or the two supporting devices (19) is/are provided in an axially extending manner at the bottom of the depression (38).

8. Screw-spindle pump according to Claim 7, **characterized in that** the or each supporting device (19) has a base (39) which is integrally formed on the bottom and from which the supporting pin (21), which is narrower in comparison with the base (39), projects.

9. Screw-spindle pump according to Claim 7 or 8, **characterized in that** the bottom has a bearing bore (24) which is passed through by a drive shaft (27) of a drive motor and by way of which the drive shaft (27) is mounted.

10. Screw-spindle pump according to one of the preceding claims, **characterized in that** the spindle housing (2) is axially open on the side situated opposite the supporting device (19), wherein either provision is made in the region of the open end of holding means for fixing a supporting element (18), which supporting element axially supports the drive spindle (4) and the one or the two running spindles (4), or the supporting element (18) is accommodated between the end face of the spindle housing (2) and an axial housing wall (33) of the outer housing (7).

11. Screw-spindle pump according to Claim 10, **characterized in that** the holding means are designed in the form of two mutually oppositely situated apertures (31) in the spindle housing (2), into which apertures the supporting element engages in the form of a feather key (18).

12. Screw-spindle pump according to one of the preceding claims, **characterized in that** the axial fluid outlet for the fluid conveyed through the spindle housing (2) via the drive and running spindles (3, 4) communicates with a fluid chamber (16) which is formed between the spindle housing (2) and the outer housing (7) and which extends through 360° and which, in turn, communicates with the radial fluid-outlet connection (10) of the outer housing.

13. Screw-spindle pump according to Claim 12, **characterized in that** the fluid chamber (16) extends over at least half the length of the spindle bore (29, 30).

14. Screw-spindle pump according to Claim 12 or 13, **characterized in that** a depression (38) of the housing plate (35) serves as a diverting cavity which diverts to the fluid chamber (16) the fluid coming from the fluid outlet of the spindle housing (2) .

15. Screw-spindle pump according to one of Claims 1 to 13, **characterized in that** provision is made at a housing (34) of a drive motor (30) mounted onto the outer housing (7) of a diverting cavity which diverts to the fluid chamber (16) the fluid coming from the fluid outlet of the spindle housing (2).

16. Screw-spindle pump according to Claim 14 or 15, **characterized in that** the one diverting cavity is a ring-shaped groove or pot-shaped depression (38) that is of rounded form in the region of the groove base or of the depression base.

17. Use of a screw-spindle pump (1) according to one of the preceding claims in a motor vehicle for conveying an operating liquid.

18. Use according to Claim 17, **characterized in that** the screw-spindle pump (1) is used as a coolant pump, in particular for conveying a coolant which serves for cooling an energy store.

## Revendications

1. Pompe à broche filetée, comprenant un boîtier de broche (2) dans lequel une broche d'entraînement (3) et au moins une broche mobile (4) s'engrenant avec celle-ci sont logées dans des alésages de broche (29, 30) et qui comporte une entrée de fluide axiale et une sortie de fluide axiale, et comprenant également un boîtier extérieur (7) abritant le boîtier de broche (2), **caractérisée en ce qu'**un dispositif de support (19) qui supporte au moins une broche mobile (4) et qui comprend une tige de support (21) faisant saillie axialement est prévu sur le boîtier de broche (2) en matière synthétique dans la zone de la sortie de fluide ou bien **en ce qu'**un dispositif de support (19) qui supporte axialement au moins une broche mobile (4) et qui comprend une tige de support (21) faisant saillie axialement est prévu sur une plaque de boîtier (35) en matière synthétique qui est placée sur le boîtier extérieur (7) et qui ferme axialement le boîtier extérieur (7).

2. Pompe à broche filetée selon la revendication 1, **caractérisée en ce que** deux broches mobiles (4) sont prévues qui sont disposées des deux côtés de la broche d'entraînement (3), le dispositif de support (19) comprenant deux tiges de support (21) ou deux dispositifs de support (19) étant prévus qui comprennent chacun une broche de support (21).

3. Pompe à broche filetée selon la revendication 1 ou 2, **caractérisée en ce que** le ou les axes de support (21) ont une section transversale ronde, ovale ou polygonale.

4. Pompe à broche filetée selon l'une des revendications précédentes, **caractérisée en ce qu'**un dispositif de support (19) formé sur le boîtier de broche (2) comporte au moins une nervure ou au moins deux nervures (20), la ou chaque nervure (20) s'engageant par-dessus un alésage de broche (30) qui reçoit la broche mobile (4) et une tige de support (21) étant prévue sur la ou chaque nervure (20).

5. Pompe à broche filetée selon la revendication 4, **caractérisée en ce que** le dispositif de support (19) comporte un alésage de palier (24) traversé par un arbre d'entraînement (27) d'un moteur d'entraînement et logeant l'arbre d'entraînement (27).

6. Pompe à broche filetée selon la revendication 5, **caractérisée en ce que** le dispositif de support (19) comporte une portion annulaire centrale (23) sur laquelle est prévu l'alésage de palier (24) à partir duquel les nervures (20, 25) s'étendent jusqu'au côté.

7. Pompe à broche filetée selon l'une des revendications 1 à 3, **caractérisée en ce que** la plaque de boîtier (35) comporte un évidement (38) en forme de coupelle dans lequel s'écoule le fluide qui s'écoule depuis la sortie de fluide du boîtier de broche (2), le dispositif de support ou les deux dispositifs de support (19) étant prévus au fond de l'évidement (38) en s'étendant axialement.

8. Pompe à broche filetée selon la revendication 7, **caractérisée en ce que** le ou chaque dispositif de support (19) comporte une base (39) formée sur le fond à partir de laquelle s'étend la tige de support (21), plus étroite que la base (39).

9. Pompe à broche filetée selon la revendication 7 ou 8, **caractérisée en ce que** le fond comporte un alésage de palier (24) traversé par un arbre d'entraînement (27) d'un moteur d'entraînement et logeant l'arbre d'entraînement (27).

10. Pompe à broche filetée selon l'une des revendications précédentes, **caractérisée en ce que** le boîtier de broche (2) est ouvert axialement du côté opposé au dispositif de support (19), des moyens de retenue destinés à la fixation d'un élément de support (18), qui supporte axialement la broche d'entraînement (4) et l'une des broches mobiles (4) ou les deux, étant prévus dans la zone de l'extrémité ouverte ou bien l'élément de support (18) étant reçu entre la face frontale du boîtier de broche (2) et une paroi de boîtier axiale (33) du boîtier extérieur (7).

11. Pompe à broche filetée selon la revendication 10, **caractérisée en ce que** les moyens de retenue sont conçus sous la forme de deux passages opposés (31) dans le boîtier de broche (2) dans lesquels l'élément de support s'engage sous la forme d'un ressort d'ajustage (18) .

12. Pompe à broche filetée selon l'une des revendications précédentes, **caractérisée en ce que** la sortie de fluide axiale destinée au fluide transporté à travers le boîtier de broche (2) par le biais de la broche d'entraînement et de la broche mobile (3, 4) communique avec une chambre de fluide (16) qui s'étend sur 360°, qui est formée entre le boîtier de broche (2) et le boîtier extérieur (7) et qui communique à son tour avec le raccord de sortie de fluide radiale (10) du boîtier extérieur.

13. Pompe à broche filetée selon la revendication 12, **caractérisée en ce que** la chambre de fluide (16) s'étend sur au moins la moitié de la longueur de l'alésage de broche (29, 30).

14. Pompe à broche filetée selon la revendication 12 ou 13, **caractérisée en ce qu'**un évidement (38) de la plaque de boîtier (35) sert de cavité de déviation qui dévie le fluide provenant de la sortie de fluide du boîtier de broche (2) vers la chambre de fluide (16).

15. Pompe à broche filetée selon l'une des revendications 1 à 13, **caractérisée en ce qu'**une cavité de déviation, qui dévie le fluide provenant de la sortie de fluide du boîtier de broche (2) vers la chambre de fluide (16), est prévue sur un boîtier (34) d'un moteur d'entraînement (30) placé sur le boîtier extérieur (7).

16. Pompe à broche filetée selon la revendication 14 ou 15, **caractérisée en ce que** la cavité de déviation est une rainure annulaire ou un évidement (38) en forme de coupelle qui est arrondie au niveau du fond de la rainure ou de l'évidement.

17. Utilisation d'une pompe à broche filetée (1) selon l'une des revendications précédentes dans un véhicule automobile pour transporter un fluide de service.

18. Utilisation selon la revendication 17, **caractérisée en ce que** la pompe à broche filetée (1) est utilisée comme pompe à agent de refroidissement, notamment pour transporter un agent de refroidissement servant à refroidir un accumulateur d'énergie.
